(19) **Europäisches Patentamt**
**European Patent Office**
**Office européen des brevets**

(11) **EP 3 083 269 B1**

(12) **FASCICULE DE BREVET EUROPEEN**

(45) Date de publication et mention de la délivrance du brevet:
**10.03.2021 Bulletin 2021/10**

(21) Numéro de dépôt: **14825311.5**

(22) Date de dépôt: **18.12.2014**

(51) Int Cl.:
**B60B 19/14** (2006.01)      **B60B 33/08** (2006.01)
**B62D 57/00** (2006.01)

(86) Numéro de dépôt international:
**PCT/EP2014/078560**

(87) Numéro de publication internationale:
**WO 2015/091856 (25.06.2015 Gazette 2015/25)**

(54) **ROUE SPHÉRIQUE DESTINÉE À MOUVOIR UN VÉHICULE ET VÉHICULE METTANT EN OEUVRE LA ROUE**

KUGELFÖRMIGES RAD ZUM BEWEGEN EINES FAHRZEUGES UND FAHRZEUG MIT DEM RAD

SPHERICAL WHEEL INTENDED FOR MOVING A VEHICLE AND VEHICLE USING THE WHEEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2013 FR 1363339**

(43) Date de publication de la demande:
**26.10.2016 Bulletin 2016/43**

(73) Titulaire: **Softbank Robotics Europe**
**75015 Paris (FR)**

(72) Inventeurs:
• **CLERC, Vincent**
**92140 Clamart (FR)**
• **ROUX, Philippe**
**75015 Paris (FR)**

(74) Mandataire: **Marks & Clerk France**
**Immeuble "Visium"**
**22, avenue Aristide Briand**
**94117 Arcueil Cedex (FR)**

(56) Documents cités:
**WO-A1-2013/164327      JP-A- 2007 210 576**
**NL-A- 7 906 664**

**Description**

L'invention concerne une roue sphérique destinée à mouvoir un véhicule et un véhicule mettant en œuvre la roue.

De façon classique les véhicules à quatre roues sont équipés de roues directionnelles leur permettant de changer de direction. Les roues sont reliées au véhicule au moyen de liaisons pivot et dans le cas de roues directionnelles, un degré de liberté supplémentaire en rotation est ajouté. Lorsque les roues directionnelles sont motrices, des joints de cardan permettent d'entrainer les roues tout en permettant de modifier l'orientation de l'axe de la liaison pivot. Ce type de configuration ne permet pas de réaliser des rayons de braquage faible. En d'autres termes, il est impossible de faire pivoter le véhicule sur place sans vitesse.

Par ailleurs, on a tenté de réaliser un véhicule possédant des roues sphériques pouvant chacune pivoter sur elle-même. Un exemple d'une telle réalisation est décrit dans la demande de brevet publiée sous le numéro JP 2007-210576. Ce document décrit une roue comprenant deux hémisphères. La roue est actionnée par un arbre moteur horizontal qui entraine en rotation, un support portant les deux hémisphères. Ces derniers sont montés sur le support, chacun par l'intermédiaire d'une liaison pivot. Les deux liaisons pivots sont alignées. Leur axe commun est perpendiculaire à l'axe de rotation de l'arbre moteur. Un véhicule, tel qu'un robot peut être équipé de quatre roues telle que décrite dans le document JP 2007-210576. On dispose alors les axes des arbres moteurs de quatre roues perpendiculairement les uns aux autres. Les roues se trouvent alors alignées par paires. L'entrainement de deux roues d'une première paire permet de mouvoir le véhicule dans une direction perpendiculaire à l'axe commun de cette paire de roues. Pour la seconde paire de roues, les hémisphères tournent librement autour de leur liaison pivot. Un mouvement du robot dans une direction perpendiculaire est obtenu en entrainant les roues de la seconde paire. Des mouvements combinés sont bien entendus possibles. Ceci permet au véhicule de se déplacer dans n'importe quelle direction et même de tourner sur lui-même.

L'arbre moteur d'une roue pénètre dans la roue par un plan équatorial de la roue, situé entre les deux hémisphères. On définit le plan équatorial par analogie à la sphère terrestre. Ce plan sépare les deux hémisphères que l'on peut assimiler aux hémisphères terrestres nord et sud. L'arbre moteur doit posséder une certaine rigidité ce qui lui impose un diamètre minimum. Les deux hémisphères sont donc distants d'au moins ce diamètre. En pratique, il faut ajouter au diamètre de l'arbre un jeu fonctionnel évitant que les hémisphères ne frottent contre l'arbre moteur. On obtient donc deux hémisphères limités chacun par un plan. Les plans des deux hémisphères sont parallèles et disposés à une distance que l'on ne peut réduire pas sans risque de nuire à la rigidité de l'arbre moteur.

Lorsque le plan équatorial de la roue est en position vertical par rapport au sol, que l'on suppose horizontal, une discontinuité de l'appui de la roue sur le sol apparait. Plus précisément, Lorsque la roue est motrice, le plan équatorial de la roue vient à chaque tour de roue en contact avec le sol et entraine un passage de l'appui sur le sol d'un hémisphère à l'autre et donc d'un plan d'un hémisphère à l'autre. Lors du passage par cette discontinuité, une perte d'adhérence peut se produire, la sphéricité de la roue est momentanément perdue et à grande vitesse un bruit intervient à chaque passage.

Dans la demande de brevet français FR 12-53981 déposée le 30 avril 2012 au nom de la demanderesse, également publiée sous le n° WO 2013/164327 A1, une autre roue sphérique, voisine de celle décrite dans le document JP 2007-210576, a été proposée. Cette autre roue sphérique réduit l'inconvénient de la discontinuité au niveau du passage par le plan équatorial de la roue en rendant sécants les plans limitant les deux hémisphères. En pratique, l'appellation « hémisphère » ne peut plus être utilisée et est remplacé par le terme calotte pour définir les deux parties de roue dont chacune des surfaces suit la surface sphérique de la roue. Les calottes sont articulées chacune au moyen d'une liaison pivot par rapport à l'arbre moteur de la roue. Les deux calottes sont limitées chacune par un plan et les deux plans sont sécants. Autrement dit, les axes des deux liaisons pivots ne sont plus alignés.

Ces deux réalisations présentent une singularité lorsque l'axe d'une des liaisons pivot est perpendiculaire au sol. Dans cette configuration, si le véhicule mettant en œuvre la roue possède un vecteur vitesse non perpendiculaire à l'axe moteur de la roue considérée, celle-ci glisse au niveau de son point de contact avec le sol. Pour éviter ce glissement, chaque calotte (ou hémisphère) comprend une roulette disposée dans le prolongement de la liaison pivot de la calotte considérée et assurant un roulement au niveau de la surface sphérique. Les roulettes possèdent un degré de liberté en rotation autour d'un axe perpendiculaire à l'axe moteur de la roue. Ce mouvement de rotation suffit pour éviter le glissement de la roue dans une configuration de singularité. Les roulettes possèdent chacune une ligne de roulement qui suit la surface sphérique de la roue.

Aussi bien dans le document JP 2007-210576 que dans la demande de brevet français FR 12-53981, les roulettes sont le plus petites possibles afin de conserver des surfaces de calottes les plus grandes possibles pour la roue. En effet, la roue ne peut être motrice que lorsqu'elle est en contact sur le sol sur la surface de ses calottes. On est donc incité à réduire au maximum les dimensions des roulettes, notamment pour réduire le plus possible l'ouverture circulaire réalisée dans chacune des calottes pour lasser passer les roulettes respectives.

Une autre roue sphérique est décrite dans le document NL 7 906 664 A.

Des essais réalisés en interne par la demanderesse ont montré que lors du passage par la singularité, la vitesse de rotation de la calotte considérée évoluait de façon très importante, ce qui présente un inconvénient du fait de l'inertie de la calotte. Plus précisément, pour une vitesse linéaire constante du véhicule, la vitesse de rotation d'une calotte en contact avec le sol peut évoluer d'une valeur minimale lorsque la rotation de la calotte se fait au niveau du plan qui la limite à une valeur maximale lorsque la rotation de la calotte se fait au niveau du bord de l'ouverture ménagée pour le passage de la roulette. Toujours pour une vitesse linéaire constante du véhicule, on peut avoir une séquence enchaînant différents points de contact avec le sol :

- contact avec le sol sur le plan limitant la calotte,
- passage par le bord de l'ouverture,
- roulage sur la roulette,
- passage à nouveau par le bord de l'ouverture,
- et enfin retour au plan limitant la calotte.

Lors du premier passage par le bord de l'ouverture, la vitesse de rotation de la calotte autour de sa liaison pivot se fait dans un sens qui doit s'inverser au moment du second passage par le bord de l'ouverture pour éviter tout frottement de la calotte sur le sol. L'inertie de la calotte peut gêner cette inversion de sens de rotation. Cette gêne est d'autant plus importante que les dimensions de l'ouverture sont faibles du fait des grandes vitesses de rotation atteintes par la calotte. Cette gêne est encore amplifiée avec une augmentation de la vitesse linéaire du véhicule. En effet, cette augmentation de vitesse linéaire tend à augmenter la vitesse de rotation de la calotte et réduire le temps disponible pour l'inversion de vitesse de rotation au voisinage de la singularité. Ces brusques changements de vitesse pour la calotte nécessitent comme pour la roulette un apport d'énergie cinétique important et peut générer des risques de frottement entre la roue et le sol.

L'invention vise à réduire la vitesse de rotation de la calotte au voisinage de la singularité. A cet effet, l'invention a pour objet une roue sphérique de rayon R destinée à mouvoir un véhicule, la roue étant motorisée en rotation par un arbre pouvant tourner autour d'un axe, la roue comprenant deux calottes dont la surface suit la surface sphérique de la roue et limitées chacune par un plan, les calottes étant articulées chacune au moyen d'une liaison pivot par rapport à l'arbre autour d'un axe perpendiculaire au plan de la calotte considérée, la roue comprenant en outre deux roulettes chacune disposée dans une ouverture de chacune des calottes, l'ouverture étant circulaire et centrée autour de l'axe de la liaison pivot correspondante, chaque roulette, étant disposée dans le prolongement de la liaison pivot de la calotte considérée, chaque roulette étant libre en rotation autour d'un axe perpendiculaire à l'axe de l'arbre, chaque roulette assurant un roulement au niveau de la surface sphérique, caractérisée en ce que l'ouverture de chaque calotte possède un rayon S autour de l'axe de sa liaison pivot et en ce que les rayons S de l'ouverture de chaque calotte et r de la roulette correspondante sont définis de façon à sensiblement équilibrer des efforts nécessaires à entrainer une calotte et la roulette correspondante lorsque la roue passe d'un appui au sol sur une calotte au bord de l'ouverture à un appui au sol sur la roulette correspondante.

Une ligne de roulement des roulettes occupent un secteur angulaire centré sur le centre de la roue sphérique. Ce secteur angulaire est avantageusement supérieure à 35°.

L'invention a également pour objet un véhicule comprend au moins trois roues selon l'invention. Les axes des arbres d'au moins deux roues ne sont pas alignés.

D'autres essais réalisés en interne par la demanderesse ont montré que lors du passage par la singularité un faible diamètre de la roulette entraine une augmentation de sa vitesse angulaire pour une même vitesse linéaire du véhicule. La roulette n'étant pas motorisée et étant libre autour de son axe de rotation, c'est le mouvement du véhicule qui doit entrainer la roulette. Lors du passage par la singularité, la roulette doit passer d'une vitesse nulle à une vitesse importante. Du fait de l'inertie de la roulette, des frottements peuvent apparaitre entre la roulette et le sol. De plus, l'évolution rapide de la vitesse de rotation de la roulette nécessite, ici aussi, un apport d'énergie cinétique en un temps très court au moment où le contact de la roue sur le sol quitte la calotte pour se faire sur la roulette. Cet apport d'énergie peut générer des à-coups dans le mouvement du véhicule.

L'énergie cinétique étant fonction du carré de la vitesse rotation de la roulette, l'invention vise avantageusement à réduire cet apport d'énergie grâce à une augmentation du diamètre de la roulette qui entraine une diminution de l'énergie cinétique nécessaire à entrainer la roulette. L'invention permet bien entendu de réduire les risques de frottement qui pourraient apparaitre lors de l'entrainement en rotation de la roulette. L'invention présente une utilité importante aux grandes vitesses du véhicule.

A cet effet, un plus grand rayon r de chacune des roulettes autour de son axe respectif est supérieur au quart du rayon R de la roue sphérique. Cette caractéristique concernant le rayon r des roulettes présente déjà un avantage même si le secteur angulaire défini plus haut et occupé par les roulettes est inférieur à 35°.

L'invention sera mieux comprise et d'autres avantages apparaîtront à la lecture de la description détaillée d'un mode de réalisation donné à titre d'exemple, description illustrée par le dessin joint dans lequel :

les figures 1 et 2 représentent une première variante de roue sphérique selon l'invention ;
la figure 3 représente une seconde variante de roue sphérique selon l'invention ;
la figures 4 représente en coupe partielle la roue des figures 1 et 2;

la figure 5 représente une autre vue extérieure de la roue des figures 1 et 2 ;

la figure 6 représente en perspective et en coupe partielle la roue des figures 1 et 2 ;

la figure 7 représente un exemple de véhicule équipé de plusieurs roues des figures 1 et 2.

Par souci de clarté, les mêmes éléments porteront les mêmes repères dans les différentes figures.

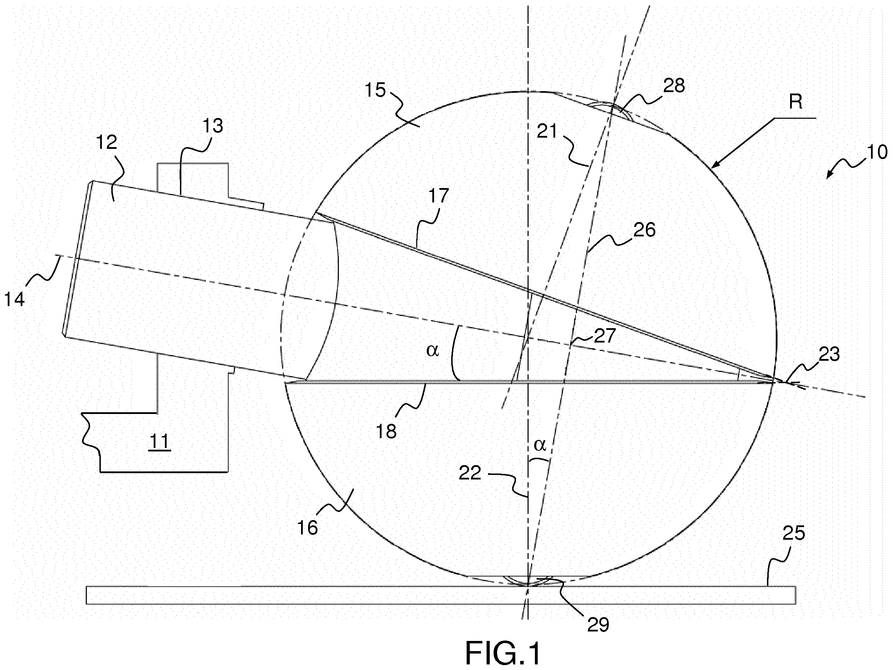

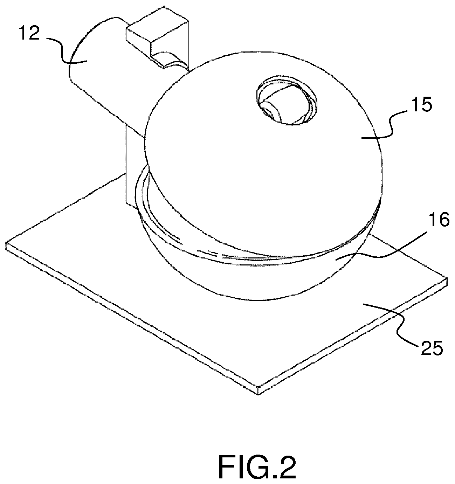

Les figures 1 et 2 représentent une roue sphérique 10 de rayon R destinée à mouvoir un véhicule 11. La figure 1 est représentée de profil et la figure 2 en perspective. La roue 10 est motorisée en rotation par un arbre 12. Le véhicule 11 est représenté par sa caisse et l'arbre 12 est lié à la caisse par une liaison pivot 13. L'axe de rotation de l'arbre 12 porte le repère 14.

La roue 10 comprend deux calottes 15 et 16 dont la surface externe suit la surface sphérique de la roue 10. La calotte 15 est limitée par un plan 17 et la calotte 16 est limitée par un plan 18. Les calottes 15 et 16 sont articulées chacune au moyen d'une liaison pivot, respectivement 19 et 20 par rapport à l'arbre 12. L'axe 21 de la liaison pivot 19 est perpendiculaire au plan 17 de la calotte 15 et l'axe 22 de la liaison pivot 20 est perpendiculaire au plan 18 de la calotte 16. Les deux liaisons pivot 19 et 20 sont disposées à l'intérieur de leur calotte respective et seront détaillées plus loin.

Il est possible de réaliser des calottes 15 et 16 différentes, mais avantageusement, celle-ci sont identiques et disposées symétriquement par rapport à l'arbre 12. Autrement dit, les plans 17 et 18 sont sécants selon une droite possédant un point d'intersection 23 avec l'axe 14 de l'arbre 12. Dans cette configuration, les axes 21 et 22 des deux liaisons pivot 19 et 20 sont sécants est forment un angle non nul entre eux.

La roue 10 est destinée à rouler sur le sol repéré 25 sur les figures 1 et 2. Une des deux calottes 15 ou 16 est en contact avec le sol 25. Lorsque l'arbre 12 entraine la roue 10, celle-ci maintient un contact avec le sol 25 selon un cercle 26 de la surface sphérique de la roue 10. Dans ce mouvement, le véhicule possède un vecteur vitesse perpendiculaire à l'axe 14 au point d'intersection 27 entre l'axe 14 et un plan contenant le cercle 26. Lorsque le vecteur vitesse du véhicule 11, appliqué au point 26 n'est pas perpendiculaire à l'axe 14, la calotte qui est en contact avec le sol se met à tourner librement autour de sa liaison pivot.

Autrement dit, la calotte en contact avec le sol 25 peut être animée de deux mouvements : une première rotation motrice autour de l'axe 14 et une seconde rotation autour de l'axe de sa liaison pivot. Les deux rotations peuvent bien entendu se combiner en fonction de la direction du vecteur vitesse du véhicule au point 26.

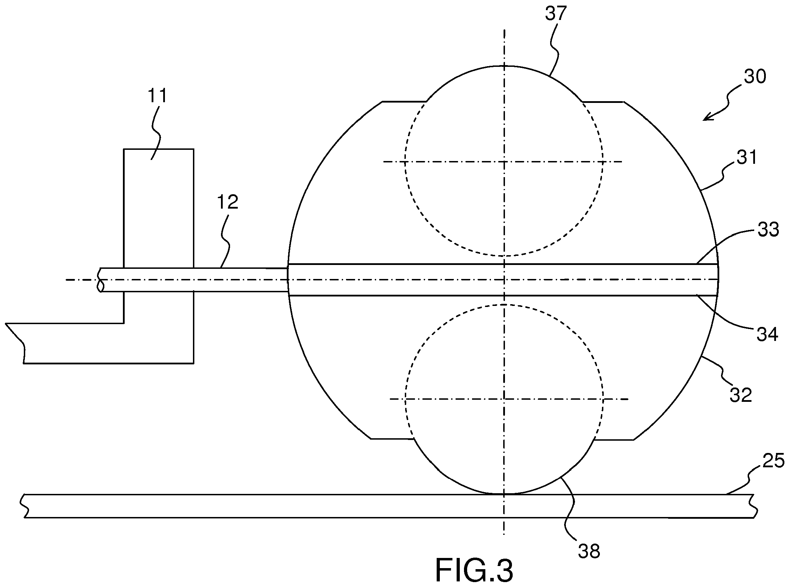

La figure 3 représente une variante de roue sphérique 30 motorisée en rotation par un arbre 12 sortant d'un véhicule 11. La roue 30 comprend deux calottes 31 et 32 dont la surface suit la surface sphérique de la roue 30. La calotte 31 est limitée par un plan 33 et la calotte 32 est limitée par un plan 34. A la différence de la roue 10, les plans 33 et 34 sont parallèles entre eux et parallèles à l'axe 14 de l'arbre 12. Dans cette variante, l'axe 12 est parallèle au sol 25, en supposant que le sol 25 soit plan.

Dans le fonctionnement des roues 10 et 30 une singularité apparait lorsque la calotte en contact avec le sol 25, la calotte 16 sur la figure 1 ou la calotte 32 sur la figure 3, a son plan, respectivement 18 et 34 horizontal.

Dans cette configuration, si le véhicule de la figure 1 possède un vecteur appliqué au point 27 non perpendiculaire à l'axe 14, alors la calotte 16 ne peut pas tourner autour de sa liaison pivot 20 et glisse sur le sol 25. Pour éviter ce glissement, la roue 10 comprend deux roulettes 28 et 29, une roulette étant associée à chacune des calottes. Chaque roulette est disposée dans le prolongement de la liaison pivot de la calotte considérée et assure un roulement au niveau de la surface sphérique de la roue 10. Plus précisément, la calotte 15 est équipée de la roulette 28 et la calotte 16 de la roulette 29. Les roulettes 28 et 29 peuvent posséder un seul degré de liberté en rotation autour d'un axe perpendiculaire à l'axe 14. Ce mouvement de rotation suffit pour éviter le glissement de la roue dans une configuration de singularité. Les roulettes possèdent chacune une ligne de roulement qui suit la surface sphérique de la roue 10.

Il en est de même pour la roue 30 qui comprend deux roulettes 37 et 38, une roulette associée à chacune des calottes, respectivement 31 et 32.

La suite de la description est faite en rapport à la variante de roue 10 représentée sur les figures 1 et 3. Les caractéristiques qui sont présentées s'appliquent également à la roue 30.

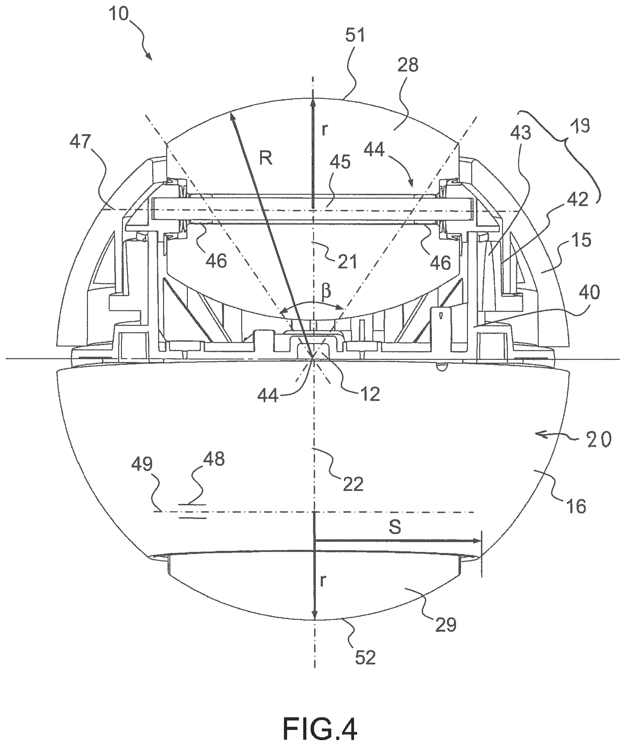

La figure 4 représente en coupe partielle la roue 10 dans un plan contenant les axes de rotation des deux roulettes 28 et 29. Seule la calotte 15 est coupée. La roue 10 comprend un support 40 solidaire de l'arbre 12. Le support 40 tourne autour de l'axe 14 avec l'arbre 12.

La liaison pivot 19 relie le support 40 et la calotte 15. La liaison pivot 19 est formée d'un palier 42. De même la liaison pivot 20, masquée sur la figure 4, relie le support 40 et la calotte 16. Il est bien entendu possible de mettre en œuvre plusieurs paliers par calotte en fonction de la rigidité recherchée pour la roue 10. Dans ce mode de réalisation, le palier 42 est formé au moyen d'une entretoise 43 s'interposant entre le support 40 et la calotte 15. L'entretoise 43 est par exemple réalisée dans un matériau permettant d'obtenir un faible coefficient de frottement. On peut par exemple utiliser du polytétrafluoroéthylène. Les deux liaisons pivot 19 et 20 sont avantageusement identiques. D'autres modes de réalisation des paliers sont possibles. On peut par exemple utiliser des paliers à roulements pour limiter le couple résistant dans la rotation des liaisons pivot 19 et 20.

Une liaison pivot 44 relie la roulette 28 et l'arbre 12 par l'intermédiaire du support 40. La liaison pivot 44 permet à la roulette 28 de tourner librement autour d'un axe 47. La liaison pivot 44 est par exemple réalisée au moyen d'un arbre 45 porté à ses deux extrémités par le support 40. La roulette 28 est traversée par l'arbre 45. La roulette 28 tourne librement par rapport à l'arbre 45. Des coussinets peuvent être placés entre l'arbre 45 et la roulette 28. Comme pour l'entretoise 43, les coussinets peuvent être réalisés dans un matériau à faible coefficient de frottement comme par exemple du polytétrafluoroéthylène.

De même une liaison pivot 48, semblable à la liaison pivot 44 et masquée sur la figure 4 relie la roulette 29 et l'arbre 12 par l'intermédiaire du support 40. Cette liaison pivot permet à la roulette 29 de tourner librement autour d'un axe 49.

Les roulettes 28 et 29 ont une forme de tonneau de façon à ce que leur ligne de roulement respective 51 et 52, visible sur la figure 4, suive la forme sphérique de la roue 10. Une ligne de roulement 51 ou 52 est une courbe formée à la surface d'une roulette 28 ou 29, courbe la plus éloignée de l'axe 14. Sur une roulette, la ligne de roulement se déplace à la surface de la roulette en fonction de sa rotation. La ligne de roulement d'une roulette est une portion de cercle formée sur la surface sphérique de la roue 10. La ligne de roulement 51 est située dans un plan perpendiculaire au plan 17 limitant la calotte 15. De même la ligne de roulement 52 est située dans un plan perpendiculaire au plan 18 limitant la calotte 16.

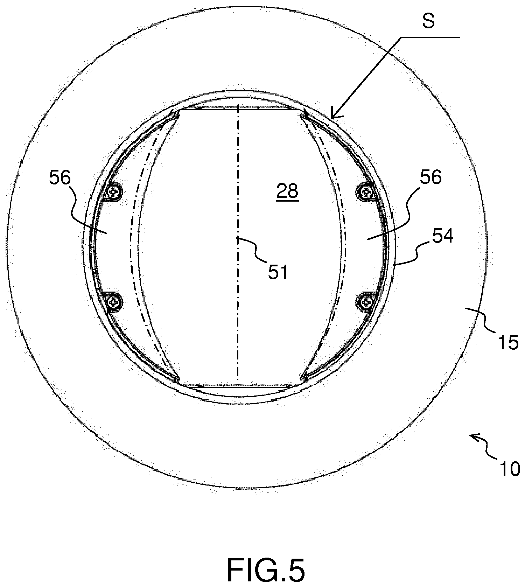

La figure 5 représente une vue de la roue 10, la vue étant centrée sur une des roulettes, par exemple la roulette 28. La roulette 28 apparait dans une ouverture circulaire 54 réalisée dans la calotte 15 et centrée sur l'axe 21. L'ouverture de chaque calotte possède un rayon S autour de l'axe de sa liaison pivot correspondante.

Pour éviter de brusques changements de vitesse pour la calotte 15 lorsque l'appui de la roue 10 au sol quitte la calotte 15, se fait sur la roulette 28 et revient enfin se faire sur la calotte 15, on augmente la longueur de la ligne de roulement 51 et par conséquent le diamètre S de l'ouverture 54. La ligne de roulement 51 ou 52 de chacune des roulettes 28 et 29 occupent un secteur angulaire β centré sur le centre de la roue sphérique. Avantageusement, le secteur angulaire β est supérieur à 35°. Des essais en interne ont montré qu'une valeur optimale de secteur angulaire est comprise entre 45° et 50°. Par construction, il est possible de réaliser un secteur angulaire maximum de 130°. La valeur retenue dépend des inerties des différentes pièces en mouvement et des frottements entre ces différentes pièces.

Le plus grand rayon de chacune des roulettes 28 et 29 autour de leur axe, respectivement 47 et 49 est noté r. Afin de limiter la vitesse de rotation des roulettes 28 et 29, on peut augmenter le rayon r des roulettes 28 et 29. Des essais en interne ont montrés que lorsque le rayon r de chacune des roulettes 28 et 29 est supérieur au quart du rayon R de la roue sphérique 10, la réduction de vitesse des roulettes est déjà notable.

Il est possible d'atteindre un rayon r égal à la moitié du rayon R de la roue sphérique 10 au moyen d'une disposition particulière de l'arbre 12 et du support 40. L'arbre 12 aurait alors une extrémité n'atteignant pas le centre de la sphère. Dans la configuration où le rayon r est égal à la moitié du rayon R, les deux roulettes 28 et 29 se touchent. Ceci permet d'augmenter l'inertie de la roulette qui est en contact avec le sol 25. Plus précisément, lorsqu'une des roulettes entre en contact aven le sol, sa rotation entraine l'autre roulette. L'inertie obtenue est sensiblement doublée par rapport à l'inertie d'une roulette seule.

D'autres valeurs intermédiaires de proportions entre les rayons r et R son également envisagées. Si à partir d'un rayon r égal au quart du rayon R de la sphère la réduction de la vitesse de rotation de la roulette est déjà intéressant, on a constaté que lorsque le rayon maximal r de chacune des roulettes 28 et 29 autour de son axe respectif 47 et 49 est supérieur au tiers du rayon R la réduction de la vitesse de rotation de la roulette est particulièrement intéressante.

Il est bien entendu possible de réaliser cette même structure pour les roulettes 27 et 38 de la roue sphérique 30.

Le rayon r des roulettes et le secteur angulaire β occupé par la ligne de roulement des roulettes peuvent être optimisés indépendamment l'un de l'autre. Par ailleurs, le rayon S de l'ouverture 54 est lié au secteur angulaire β afin de réduire au maximum le jeu fonctionnel entre la roulette et son ouverture. Il est avantageux d'équilibrer les efforts nécessaires à entrainer une calotte et une roulette correspondante lorsque la roue 10 passe d'un appui au sol d'une calotte au bord de son ouverture à un appui au sol sur la roulette correspondante et inversement. Cela permet d'éviter des variations brutales de l'effort entre la roue 10 et le sol au moment de la transition, une telle variation d'effort se traduisant par un à-coup sur l'arbre 12 et donc sur le véhicule équipé de la roue 10.

Une fois les matériaux choisis, l'équilibrage des efforts se fait principalement au moyen des dimensions relatives du rayon S de l'ouverture et du rayon r de la roulette correspondante. De façon plus concise, les rayons S de l'ouverture de chaque calotte et r de la roulette correspondante sont définis de façon à sensiblement équilibrer des efforts nécessaires à entrainer une calotte et la roulette correspondante lorsque la roue passe d'un appui au sol sur une calotte au bord de l'ouverture à un appui au sol sur la roulette correspondante.

Pour chaque calotte il est possible de définir un couple de frottement $Cf_c$ au niveau de la liaison pivot entre la calotte considérée et l'arbre 12 et plus précisément avec le support 40. De même, il est possible de définir pour chaque roulette un couple de frottement $Cf_r$ au niveau de sa liberté en rotation par rapport à l'arbre 12.

Il est avantageux d'obtenir un équilibrage statique des efforts de frottement dus aux deux liaisons pivots 19 et 44 ou 20 et 48. L'équilibrage statique est obtenu en définissant les rayons S de l'ouverture de la calotte et r de la roulette correspondante de façon à ce que l'égalité suivante soit sensiblement respectée :

$$Cf_c \,/\, S = Cf_r \,/\, r$$

Par ailleurs, il est avantageux d'obtenir un équilibrage dynamique des efforts. Les efforts sont fonction de l'inertie de la calotte et de la roulette correspondante. Ces deux inerties sont fonction des matériaux et des dimensions de la calotte et de la roulette correspondante. Les calottes et les roulettes sont définies de façon à sensiblement équilibrer des énergies cinétiques d'une calotte et de la roulette correspondante lorsque la roue passe d'un appui au sol sur la calotte au bord de l'ouverture à un appui au sol sur la roulette.

Plus précisément, pour chaque calotte un moment d'inertie $I_c$ est défini autour de l'axe de sa liaison pivot entre la calotte considérée et l'arbre. Pour chaque roulette un moment d'inertie $I_r$ est défini autour de l'axe sa liberté en rotation par rapport à l'arbre moteur 12 de la roue 10. Les dimensions et les matériaux des calottes 15 et 16 et des roulettes 28 et 29 sont définis pour que l'égalité suivante soit sensiblement respectée :

$$\frac{I_c.\omega_c}{2} = \frac{I_r.\omega_r}{2}$$

$\omega_c$ représentant la vitesse de rotation de la calotte lorsque la roue est appui au sol sur la calotte au bord de l'ouverture et $\omega_r$ représentant la vitesse de rotation de la roulette lorsque la roue passe d'un appui au sol sur la calotte au bord de l'ouverture à un appui au sol sur la roulette.

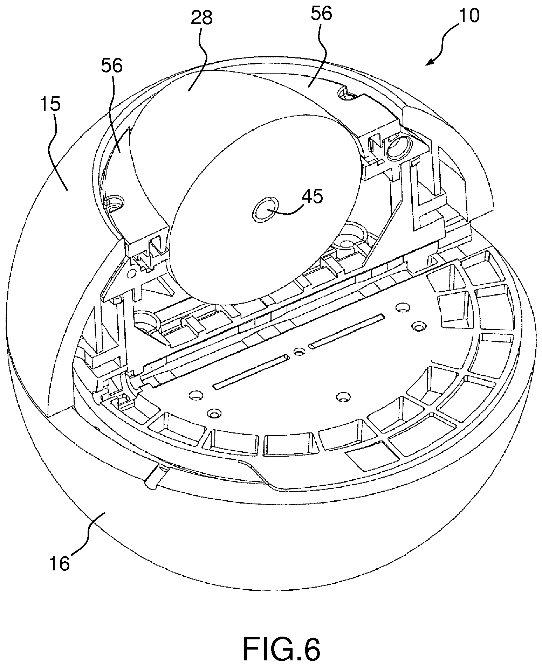

Avantageusement, la roue comprend deux caches 56 associés à chaque roulette et fixés à l'arbre 12 par l'intermédiaire du support 40. Les figures 5 et 6 illustrent les deux caches 56 associés à la roulette 28. Les caches 56 ont chacun la forme d'un croissant plat parallèle au plan 17. Les caches 56 recouvrent en partie la roulette 28 à partir de l'ouverture 54. Les caches 56 s'étendent tous deux symétriquement par rapport à la ligne de roulement 51. Les caches 56 sont solidaires du support 40. Les caches 56 permettent de limiter la pénétration de particules dans la roue 10 par l'ouverture 54. On prévoit néanmoins un jeu fonctionnel entre les caches 56 et la calotte 15 pour permettre la rotation de la calotte 15 autour de sa liaison pivot 19 sans frotter contre les caches 56.

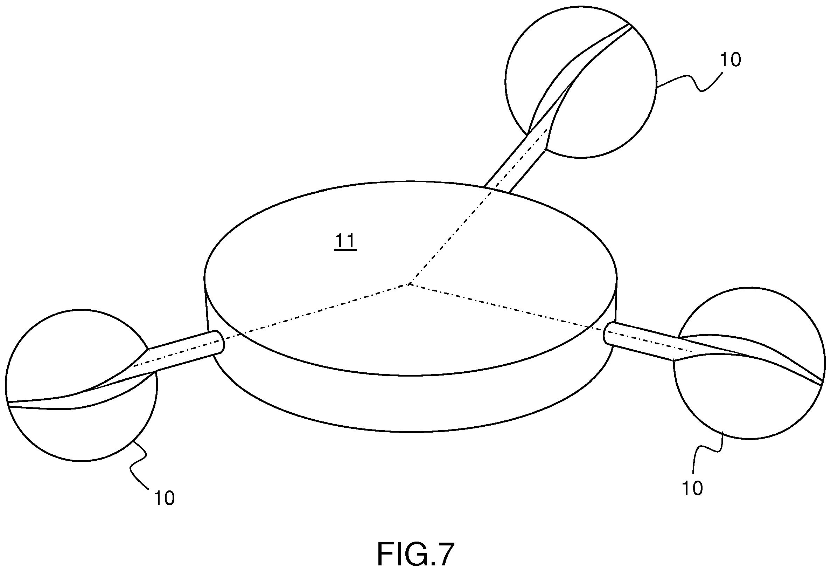

La figure 7 représente un véhicule 11 équipé de trois roues 10 selon l'invention. Ce véhicule est par exemple un robot. On peut également mettre en œuvre l'invention pour des véhicules comprenant plus de trois roues. Par exemple pour un véhicule à quatre roues, les axes de roues opposées sont situés dans un même plan vertical par rapport à un sol horizontal, formant ainsi deux paires de roues. Les plans contenant les axes des deux paires de roues sont perpendiculaires. De façon plus générale, les axes des arbres d'au moins deux roues ne sont pas disposés dans un même plan, ce qui permet au véhicule de se mouvoir dans toutes les directions en conservant ses roues 10 sur le sol 25 au moyen d'un pilotage adapté.

**Revendications**

1. Roue sphérique de rayon R destinée à mouvoir un véhicule (11), la roue (10, 30) étant motorisée en rotation par un arbre (12) pouvant tourner autour d'un axe (14), la roue (10, 30) comprenant deux calottes (15, 16 ; 31, 32) dont la surface suit la surface sphérique de la roue (10, 30) et limitées chacune par un plan (17, 18 ; 33, 34), les calottes (15, 16 ; 31, 32) étant articulées chacune au moyen d'une liaison pivot (19, 20) par rapport à l'arbre (12) autour d'un axe (21, 22) perpendiculaire au plan (17, 18 ; 33, 34) de la calotte considérée (15, 16 ; 31, 32), la roue (10, 30) comprenant en outre deux roulettes (28, 29 ; 37, 38) chacune disposée dans une ouverture (54) de chacune des calottes (15, 16 ; 31, 32), l'ouverture (54) étant circulaire et centrée autour de l'axe (21, 22) de la liaison pivot correspondante (19, 20), chaque roulette (28, 29 ; 37, 38), étant disposée dans le prolongement de la liaison pivot (19, 20) de la calotte considérée (15, 16 ; 31, 32), chaque roulette (28, 29 ; 37, 38) étant libre en rotation autour d'un axe (47, 49) perpendiculaire à l'axe (14) de l'arbre (12), chaque roulette (28, 29 ; 37, 38) assurant un roulement au niveau de la surface sphérique, **caractérisée en ce que** l'ouverture (54) de chaque calotte (15, 16 ; 31, 32) possède un rayon S autour de l'axe (21, 22) de sa liaison pivot (19, 20) et **en ce que** les rayons S de l'ouverture (54) de chaque calotte (15, 16 ; 31, 32) et r de la roulette correspondante (28, 29 ; 37, 38) sont définis de façon à sensiblement équilibrer des efforts nécessaires à entrainer une calotte (15, 16 ; 31, 32) et la roulette correspondante (28, 29 ; 37, 38) lorsque la roue (10, 30) passe d'un appui au sol sur une calotte (15, 16 ; 31, 32) au bord de l'ouverture (54) à un appui au sol sur la roulette correspondante (28, 29 ; 37, 38).

2. Roue selon la revendication 1, **caractérisée en ce qu'**une ligne de roulement (51, 52) des roulettes (28, 29 ; 37, 38) occupent un secteur angulaire (β) centré sur le centre de la roue sphérique (10 ; 30) et **en ce que** le secteur angulaire (β) est supérieure à 35°.

3. Roue selon la revendication 2, **caractérisée en ce que** le secteur angulaire (β) est inférieur à 125°.

4. Roue selon l'une des revendications 2 et 3, **caractérisée en ce que** le secteur angulaire (β) est compris entre 45° et 50°.

5. Roue selon l'une des revendications précédentes, **caractérisée en ce qu'**un plus grand rayon r de chacune des roulettes (28, 29 ; 37, 38) autour de son axe respectif (47, 49) est supérieur au quart du rayon R de la roue sphérique (10, 30).

6. Roue selon la revendication 5, **caractérisée en ce qu'**un plus grand rayon r de chacune des roulettes (28, 29 ; 37, 38) autour de son axe respectif (47, 49) est supérieur au tiers du rayon R de la roue sphérique (10, 30).

7. Roue selon la revendication 6, **caractérisée en ce qu'**un plus grand rayon r de chacune des roulettes (28, 29 ; 37, 38) autour de son axe respectif (47, 49) est égal à la moitié du rayon R de la roue sphérique (10, 30).

8. Roue selon l'une des revendications précédentes, **caractérisée en ce que** pour chaque calotte (15, 16 ; 31, 32) un couple de frottement $Cf_c$ est défini au niveau de la liaison pivot (19, 20) entre la calotte considérée (15, 16 ; 31, 32) et l'arbre (12), **en ce que** pour chaque roulette (28, 29 ; 37, 38) un couple de frottement $Cf_r$ est défini au niveau de sa liberté en rotation par rapport à l'arbre (12), **en ce que** les rayons S de l'ouverture (54) de la calotte (15, 16 ; 31, 32) et r de la roulette (28, 29 ; 37, 38) sont définis de façon à ce que l'égalité suivante soit sensiblement respectée :

$$Cf_c \: / \: S = Cf_r \: / \: r$$

9. Roue selon l'une des revendications précédentes, **caractérisée en ce que** les calottes (15, 16 ; 31, 32) et les roulettes (28, 29 ; 37, 38) sont définies de façon à sensiblement équilibrer des énergies cinétiques d'une calotte (15, 16 ; 31, 32) et de la roulette correspondante (28, 29 ; 37, 38) lorsque la roue (10, 30 passe d'un appui au sol sur la calotte (15, 16 ; 31, 32) au bord de l'ouverture (54) à un appui au sol sur la roulette (28, 29 ; 37, 38).

10. Roue selon la revendication 9, **caractérisée en ce que** pour chaque calotte (15, 16 ; 31, 32) un moment d'inertie $I_c$ est défini autour de l'axe de sa liaison pivot entre la calotte considérée (15, 16 ; 31, 32) et l'arbre (12), **en ce que** pour chaque roulette (28, 29 ; 37, 38) un moment d'inertie $I_r$ est défini autour de l'axe (47, 49) sa liberté en rotation par rapport à l'arbre (12), et **en ce que** les dimensions et les matériaux des calottes (15, 16 ; 31, 32) et des roulettes (28, 29 ; 37, 38) sont définis pour que l'égalité suivante soit sensiblement respectée :

$$\frac{I_c . \omega_c}{2} = \frac{I_r . \omega_r}{2}$$

$\omega_c$ représentant la vitesse de rotation de la calotte lorsque la roue est appui au sol sur la calotte (15, 16 ; 31, 32) au bord de l'ouverture (54) ;
$\omega_r$ représentant la vitesse de rotation de la roulette (28, 29 ; 37, 38) lorsque la roue passe d'un appui au sol sur la calotte (15, 16 ; 31, 32) au bord de l'ouverture (54) à un appui au sol sur la roulette (28, 29 ; 37, 38).

11. Roue selon l'une des revendications précédentes, **caractérisée en ce qu'**elle comprend deux caches (56) associés à chaque roulette (28, 29 ; 37, 38) et fixés à l'arbre (12), **en ce que** les caches (56) forment une portion de surface sphérique venant dans le prolongement de la surface sphérique de la calotte (15, 16 ; 31, 32) au niveau de l'ouverture (54) par laquelle ladite roulette (28, 29 ; 37, 38) est disposée, **en ce que** les caches (56) recouvrent en partie ladite roulette (28, 29 ; 37, 38) à partir de ladite ouverture (54) et **en ce que** les caches (56) s'étendent tous deux symétriquement par rapport à une ligne de roulement (51, 52) de la roulette considérée (28, 29 ; 37, 38).

12. Véhicule **caractérisé en ce qu'**il comprend au moins trois roues (10, 30) selon l'une des revendications précédentes et **en ce que** les axes (14) des arbres (12) d'au moins deux roues (10) ne sont pas disposés dans un même plan.

**Patentansprüche**

1. Kugelförmiges Rad mit Radius R, bestimmt zum Bewegen eines Fahrzeugs (11), wobei das Rad (10, 30) durch eine um eine Achse (14) drehbare Welle (12) angetrieben wird, wobei das Rad (10, 30) zwei Kappen (15, 16; 31, 32) aufweist, deren Oberfläche der kugelförmigen Oberfläche des Rades (10, 30) folgt und die jeweils durch eine Ebene (17, 18; 33, 34) begrenzt sind, wobei die Kappen (15, 16; 31, 32) jeweils mittels einer Schwenkverbindung (19, 20) in Bezug auf die Welle (12) um eine Achse (21, 22) lotrecht zur Ebene (17, 18; 33, 34) der betrachteten Kappe (15, 16; 31, 32) gelenkig gelagert sind, wobei das Rad (10, 30) ferner zwei Rollen (28, 29, 37, 38) aufweist, die jeweils in einer Öffnung (54) von jeder der Kappen (15, 16; 31, 32) angeordnet sind, wobei die Öffnung (54) kreisförmig und um die Achse (21, 22) der entsprechenden Schwenkverbindung (19, 20) zentriert ist, wobei jede Rolle (28, 29; 37, 38) in der Verlängerung der Schwenkverbindung (19, 20) der betrachteten Kappe (15, 16; 31, 32) angeordnet ist, wobei sich jede Rolle (28, 29; 37, 38) frei um eine Achse (47, 49) lotrecht zur Achse (14) der Welle (12) drehen kann, wobei jede Rolle (28, 29; 37, 38) ein Rollen an der kugelförmigen Oberfläche gewährleistet; **dadurch gekennzeichnet, dass** die Öffnung (54) jeder Kappe (15, 16; 31, 32) einen Radius S um die Achse (21, 22) ihrer Schwenkverbindung (19, 20) aufweist, und dadurch, dass die Radien S der Öffnung (54) jeder Kappe (15, 16; 31, 32) und r der entsprechenden Rolle (28, 29; 37, 38) so definiert sind, dass sie die zum Antreiben einer Kappe (15, 16; 31, 32) und der entsprechenden Rolle (28, 29; 37, 38) erforderlichen Kräfte im Wesentlichen ausgleichen, wenn das Rad (10, 30) vom Aufliegen am Boden auf einer Kappe (15, 16; 31, 32) am Rand der Öffnung (54) zum Aufliegen am Boden auf der entsprechenden Rolle (28, 29; 37, 38) übergeht.

2. Rad nach Anspruch 1, **dadurch gekennzeichnet, dass** eine Rolllinie (51, 52) der Rollen (28, 29; 37, 38) einen auf die Mitte des kugelförmigen Rades (10; 30) zentrierten Winkelsektor ($\beta$) einnimmt, und dadurch, dass der Winkelsektor ($\beta$) größer als 35° ist.

3. Rad nach Anspruch 2, **dadurch gekennzeichnet, dass** der Winkelsektor ($\beta$) kleiner als 125° ist.

4. Rad nach einem der Ansprüche 2 und 3, **dadurch gekennzeichnet, dass** der Winkelsektor ($\beta$) zwischen 45° und 50° liegt.

5. Rad nach einem der vorherigen Ansprüche, **dadurch gekennzeichnet, dass** ein größerer Radius r jeder der Rollen (28, 29; 37, 38) um seine jeweilige Achse (47, 49) größer als ein Viertel des Radius R des kugelförmigen Rades (10, 30) ist.

6. Rad nach Anspruch 5, **dadurch gekennzeichnet, dass** ein größerer Radius r jeder der Rollen (28, 29; 37, 38) um seine jeweilige Achse (47, 49) größer als ein Drittel des Radius R des kugelförmigen Rades (10, 30) ist.

7. Rad nach Anspruch 6, **dadurch gekennzeichnet, dass** ein größerer Radius r jeder der Rollen (28, 29; 37, 38) um seine jeweilige Achse (47, 49) gleich der Hälfte des Radius R des kugelförmigen Rades (10, 30) ist.

8. Rad nach einem der vorherigen Ansprüche, **dadurch gekennzeichnet, dass** für jede Kappe (15, 16; 31, 32) ein Reibungsmoment $Cf_c$ an der Schwenkverbindung (19, 20) zwischen der betrachteten Kappe (15, 16; 31, 32) und der Welle (12) definiert ist, dadurch, dass für jede Rolle (28, 29; 37, 38) ein Reibungsmoment $Cf_r$ im Bereich ihrer Drehfreiheit relativ zur Welle (12) definiert ist, und dadurch, dass die Radien S der Öffnung (54) der Kappe (15, 16; 31, 32) und r der Rolle (28, 29; 37, 38) so definiert sind, dass die folgende Gleichung im Wesentlichen eingehalten wird:

$$Cf_c \,/\, S = Cf_r \,/\, r$$

9. Rad nach einem der vorherigen Ansprüche, **dadurch gekennzeichnet, dass** die Kappen (15, 16; 31, 32) und die Rollen (28, 29; 37, 38) so definiert sind, dass sie kinetische Energien einer Kappe (15, 16; 31, 32) und der entsprechenden Rolle (28, 29; 37, 38) im Wesentlichen ausgleichen, wenn das Rad (10, 30) vom Aufliegen am Boden auf der Kappe (15, 16; 31, 32) am Rand der Öffnung (54) zum Aufliegen am Boden auf der Rolle (28, 29; 37, 38) passiert.

10. Rad nach Anspruch 9, **dadurch gekennzeichnet, dass** für jede Kappe (15, 16; 31, 32) ein Trägheitsmoment $I_c$ um die Achse ihrer Schwenkverbindung zwischen der betrachteten Kappe (15, 16; 31, 32) und der Welle (12) definiert ist, dadurch, dass für jede Rolle (28, 29; 31, 32) ein Trägheitsmoment $I_r$ um die Achse (47, 49) ihrer Drehfreiheit relativ zur Welle (12) definiert ist, und dadurch, dass die Abmessungen und die Materialien der Kappen (15, 16; 31, 32) und der Rollen (28, 29; 37, 38) so definiert sind, dass die folgende Gleichung im Wesentlichen eingehalten wird:

$$\frac{I_c . \omega_c}{2} = \frac{I_r . \omega_r}{2}$$

wobei $\omega_c$ die Drehgeschwindigkeit der Kappe repräsentiert, wenn das Rad am Boden auf der Kappe (15, 16; 31, 32) am Rand der Öffnung (54) aufliegt;
wobei $\omega_r$ die Drehgeschwindigkeit der Rolle (28, 29; 37, 38) repräsentiert, wenn das Rad vom Aufliegen am Boden auf der Kappe (15, 16; 31, 32) am Rand der Öffnung (54) zum Aufliegen am Boden auf der Rolle (28, 29; 37, 38) übergeht.

11. Rad nach einem der vorherigen Ansprüche, **dadurch gekennzeichnet, dass** es zwei Abdeckungen (56) umfasst, die mit jeder Rolle (28, 29; 37, 38) assoziiert und an der Welle (12) befestigt sind, dadurch, dass die Abdeckungen (56) einen Teil der kugelförmigen Oberfläche bilden, der in die Verlängerung der kugelförmigen Oberfläche der Kappe (15, 16; 31, 32) an der Öffnung (54) kommt, durch die die Rolle (28, 29; 37, 38) angeordnet ist, dadurch, dass die Abdeckungen (56) die Rolle (28, 29; 37, 38) von der Öffnung (54) teilweise abdecken, und dadurch, dass beide Abdeckungen (56) symmetrisch in Bezug auf eine Rolllinie (51, 52) der betrachteten Rolle (28, 29; 37, 38) verlaufen.

**12.** Fahrzeug, **dadurch gekennzeichnet, dass** es mindestens drei Räder (10, 30) nach einem der vorherigen Ansprüche umfasst, und dadurch, dass die Achsen (14) der Wellen (12) von mindestens zwei Rädern (10) nicht in derselben Ebene angeordnet sind.

**Claims**

**1.** A spherical wheel of radius R intended to move a vehicle (11), the wheel (10, 30) being driven in rotation by a shaft (12) that can rotate about an axis (14), the wheel (10, 30) comprising two caps (15, 16; 31, 32), the surface of which follows the spherical surface of the wheel (10, 30) and each delimited by a plane (17, 18; 33, 34), the caps (15, 16; 31, 32) each being articulated by means of a pivot link (19, 20) relative to the shaft (12) about an axis (21, 22) at right angles to the plane (17, 18; 33, 34) of the cap concerned (15, 16; 31, 32), the wheel (10, 30) further comprising two casters (28, 29; 37, 38) each arranged in an opening (54) of each of the caps (15, 16; 31, 32), the opening (54) being circular and centered about the axis (21, 22) of the corresponding pivot link (19, 20), each caster (28, 29; 37, 38) being arranged in the extension of the pivot link (19, 20) of the cap concerned (15, 16; 31, 32), each caster (28, 29; 37, 38) being free to rotate about an axis (47, 49) at right angles to the axis (14) of the shaft (12), each caster (28, 29; 37, 38) ensuring a rolling at the level of the spherical surface, **characterized in that** the opening (54) of each cap (15, 16; 31, 32) has a radius S about the axis (21, 22) of its pivot link (19, 20) and **in that** the radii S of the opening (54) of each cap (15, 16; 31, 32) and r of the corresponding caster (28, 29; 37, 38) are defined so as to substantially balance forces needed to drive a cap (15, 16; 31, 32) and the corresponding caster (28, 29; 37, 38) when the wheel (10, 30) goes from bearing on the ground on a cap (15, 16; 31, 32) at the edge of the opening (54) to bearing on the ground on the corresponding caster (28, 29; 37, 38).

**2.** The wheel according to claim 1, **characterized in that** a rolling line (51, 52) of the casters (28, 29; 37, 38) occupies an angular sector ($\beta$) centered on the center of the spherical wheel (10; 30) and **in that** the angular sector ($\beta$) is greater than 35°.

**3.** The wheel according to claim 2, **characterized in that** the angular sector ($\beta$) is less than 125°.

**4.** The wheel according to one of claims 2 and 3, **characterized in that** the angular sector ($\beta$) lies between 45° and 50°.

**5.** The wheel according to one of the preceding claims, **characterized in that** a greater radius r of each of the casters (28, 29; 37, 38) about its respective axis (47, 49) is greater than a quarter of the radius R of the spherical wheel (10, 30).

**6.** The wheel according to claim 5, **characterized in that** a greater radius r of each of the casters (28, 29; 37, 38) about its respective axis (47, 49) is greater than a third of the radius R of the spherical wheel (10, 30).

**7.** The wheel according to claim 6, **characterized in that** a greater radius r of each of the casters (28, 29; 37, 38) about its respective axis (47, 49) is equal to half the radius R of the spherical wheel (10, 30).

**8.** The wheel according to one of the preceding claims, **characterized in that**, for each cap (15, 16; 31, 32), a friction torque $Cf_c$ is defined at the level of the pivot link (19, 20) between the cap concerned (15, 16; 31, 32) and the shaft (12), **in that**, for each caster (28, 29; 37, 38), a friction torque $Cf_r$ is defined in its freedom to rotate relative to the shaft (12), **in that** the radii S of the opening (54) of the cap (15, 16; 31, 32) and r of the caster (28, 29; 37, 38) are defined so that the following equality is substantially observed:

$$Cf_c \: / \: S = Cf_r \: / \: r$$

**9.** The wheel according to one of the preceding claims, **characterized in that** the caps (15, 16; 31, 32) and the casters (28, 29; 37, 38) are defined so as to substantially balance the kinetic energies of a cap (15, 16; 31, 32) and of the corresponding caster (28, 29; 37, 38) when the wheel (10, 30) goes from bearing on the ground on the cap (15, 16; 31, 32) at the edge of the opening (54) to bearing on the ground on the caster (28, 29; 37, 38).

**10.** The wheel according to claim 9, **characterized in that**, for each cap (15, 16; 31, 32), a moment of inertia $I_c$ is defined about the axis of its pivot link between the cap concerned (15, 16; 31, 32) and the shaft (12), **in that**, for each caster (28, 29; 37, 38), a moment of inertia $I_r$ is defined about the axis (47, 49) of its freedom to rotate relative to the shaft (12), and **in that** the dimensions and the materials of the caps (15, 16; 31, 32) and of the casters (28, 29; 37, 38) are defined for the following equality to be substantially observed:

$$\frac{I_c . \omega c}{2} = \frac{I_r . \omega r}{2}$$

$\omega_c$ representing the speed of rotation of the cap when the wheel is bearing on the ground on the cap (15, 16; 31, 32) at the edge of the opening (54);

$\omega_r$ representing the speed of rotation of the caster (28, 29; 37, 38) when the wheel goes from bearing on the ground on the cap (15, 16; 31, 32) at the edge of the opening (54) to bearing on the ground on the caster (28, 29; 37, 38).

11. The wheel according to one of the preceding claims, **characterized in that** it comprises two covers (56) associated with each caster (28, 29; 37, 38) and fixed to the shaft (12), **in that** the covers (56) form a portion of spherical surface coming into the extension of the spherical surface of the cap (15, 16; 31, 32) at the level of the opening (54) through which said caster (28, 29; 37, 38) is arranged, **in that** the covers (56) partly cover said caster (28, 29; 37, 38) from said opening (54) and **in that** the covers (56) both extend symmetrically relative to a rolling line (51, 52) of the caster concerned (28, 29; 37, 38).

12. A vehicle, **characterized in that** it comprises at least three wheels (10, 30) according to one of the preceding claims and **in that** the axes (14) of the shafts (12) of at least two wheels (10) are not arranged in a same plane.

FIG.1

FIG.2

EP 3 083 269 B1

FIG.3

FIG.4

FIG.5

FIG.6

FIG.7

EP 3 083 269 B1

**EP 3 083 269 B1**

**RÉFÉRENCES CITÉES DANS LA DESCRIPTION**

**Documents brevets cités dans la description**

- JP 2007210576 A
- FR 1253981
- WO 2013164327 A1
- NL 7906664 A